# EUROPÄISCHE PATENTSCHRIFT

(11) **EP 3 445 561 B1**
(45) Veröffentlichungstag und Bekanntmachung des Hinweises auf die Patenterteilung: **30.10.2024**
(21) Anmeldenummer: 17727154.1
(22) Anmeldetag: 23.05.2017
(51) Int. Cl.: B29C 64/153, B33Y 70/00, C08L 79/08

(54) **MATERIALIEN AUF KUNSTSTOFFBASIS ZUR VERARBEITUNG MITTELS GENERATIVER FERTIGUNGSVERFAHREN**
PLASTIC-BASED MATERIALS FOR PROCESSING BY MEANS OF ADDITIVE MANUFACTURING
MATÉRIAUX À BASE DE MATIÈRE PLASTIQUE DESTINÉS À ÊTRE TRANSFORMÉS AU MOYEN D'UN PROCÉDÉ DE FABRICATION ADDITIVE

(30) Priorität: 02.06.2016 DE 102016209719
(43) Veröffentlichungstag der Anmeldung: 27.02.2019
(73) Patentinhaber: Siemens Mobility GmbH, 81739 München (DE)
(72) Erfinder: OCHSENKÜHN, Manfred, 92348 Berg (DE); ZEININGER, Heinrich, 90587 Obermichelbach (DE); KUNKEL, Maximilian, 91074 Herzogenaurach (DE)
(74) Vertreter: Siemens Patent Attorneys
(86) Internationale Anmeldenummer: PCT/EP2017/062385
(87) Internationale Veröffentlichungsnummer: WO 2017/207342

(56) Entgegenhaltungen:
- WO-A1-2009/009525
- JP-A- S63 312 355
- US-A1- 2015 145 168
- US-A1- 2015 252 190

## Beschreibung

Die Erfindung betrifft ein Pulver zur Verarbeitung in einem SLS-Verfahren.

Das Selektive Laser Sinter-Verfahren ist ein pulver- und strahlbasierter Prozess, bei dem Kunststoffkörper in nahezu beliebiger Geometrie schichtweise ohne Werkzeuge und Formen aufgebaut werden. Die Oberflächengüte und die z-(Richtungs-) Abhängigkeit der mechanischen Eigenschaften sind im Vergleich zum FDM-Verfahren (fused deposition modeling = Schmelzschichtung), bei dem ein Werkstück schichtweise aus einem schmelzfähigen Kunststoff aufgebaut wird, besser. In der Regel zeigen Werkstücke, die mittels SLS hergestellt sind eine weniger ausgeprägte Anisotropie der mechanischen Eigenschaften.

Beim Verfahren des Selektiven Lasersinterns SLS werden Produkte durch das schichtweise lokale Verschmelzen mit selektiver Laserstrahlung von pulverförmigen Schichten aus eigens für dieses Verfahren entwickelten Werkstoffen mit unterschiedlichsten Eigenschaften hergestellt. Im Vergleich mit anderen additiv verarbeiteten Kunststoffen verfügen lasergesinterte Bauteile neben der sehr hohen mechanischen und/oder chemischen Belastbarkeit auch über eine sehr hohe Wärmebeständigkeit. Das SLS-Verfahren ist insbesondere durch die Temperaturdifferenz zwischen der Kristallitschmelztemperatur und der Kristallisationstemperatur der teilkristallinen Kunststoffe gekennzeichnet. Das Temperaturfenster zwischen den beiden genannten Temperaturen definiert den Aufschmelz- und Erstarrungsvorgang und damit die Aufheiz- und Abkühlphase.

Bisher werden im SLS-Verfahren teilkristalline Polyamide, Polyaryletherketone und Polymere auf Urethanbasis verarbeitet. Mit diesen Kunststoffen können im SLS-Verfahren Bauteile hergestellt werden, die, insbesondere für die Anwendung für Bauteile im Elektro-/Elektronik-Sektor (E&E), noch keinen ausreichend guten Flammschutz bieten. Deshalb gibt es bislang keine Anwendung des SLS-Verfahrens in der Herstellung von Bauteilen für den E&E-Sektor.

US2015/0145168A1 offenbart ein Verfahren zum Drucken eines 3D-Teils mit einem additiven Fertigungssystem, wobei das Verfahren die Bereitstellung eines Teilmaterials umfasst, das in seiner Zusammensetzung ein oder mehrere teilkristalline Polymere und ein oder mehrere amorphe Polymere umfasst, die mit dem einen oder den mehreren teilkristallinen Polymeren im Wesentlichen mischbar sind.

JPS63312355A offenbart eine Zusammensetzung, die ein Polyphenylensulfid mit einem bestimmten Polyetherimid enthält.

Aufgabe der vorliegenden Erfindung ist es daher, einen Kunststoff zur Verarbeitung im SLS-Verfahren zur Verfügung zu stellen, der neben einer für die Anwendung im E&E-Bereich ausreichenden Kriechstromfestigkeit einen Flammschutz, insbesondere einen intrinsischen Flammschutz, bietet.

Lösung der Aufgabe und Gegenstand der vorliegenden Erfindung ist daher ein Pulver gemäß Anspruch 1 zur Verarbeitung in einem SLS-Verfahren, einen Blend aus zumindest amorphem PEI und PPS umfassend.

Als "Blend" oder "Polyblend" bezeichnet man Mischungen aus zwei oder mehreren unterschiedlichen Polymeren. Die Eigenschaften der so entstehenden Kunststoffe unterscheiden sich von denen der Ursprungspolymere. Trotzdem ist es überwiegend eine rein physikalische Mischung ohne Ausbildung neuer chemischer Bindungen, wie sie etwa bei Copolymeren vorausgesetzt wird.

Nach einer vorteilhaften Ausführungsform der Erfindung liegt der Kristallisationsschmelzpunkt der teilkristallinen Bestandteile in einem ähnlichen Temperaturbereich wie der Glasübergangspunkt der amorphen Bestandteile des Blend. Beispielsweise liegt der Glasübergangspunkt des Blends nicht mehr als 25 °C mit dem Kristallisationsschmelzpunkt des Blends auseinander. Insbesondere ist vorgesehen, dass die beiden Temperaturen in einem Temperatur-Differenz-Bereich von 5°C bis 20 °C liegen.

Nach einer anderen Ausführungsform der Erfindung liegen die beiden Temperaturen, also die Glasübergangstemperatur des Blends einerseits und die Kristallit-Aufschmelztemperatur andererseits um bis zu 100°C auseinander. Im Einzelfall kann das zu besonders intrinsisch flammwidrigen und gleichzeitig kriechstromfesten Bauteilen führen.

Erfindungsgemäß ist vorgesehen, dass im Blend die erste Komponente, der amorphe Thermoplast mit der zweiten Komponente, dem teilkristallinen, polymeren Werkstoff im Verhältnis von 0,5 Anteile amorpher Thermoplast zu 1, 5 Anteilen teilkristallinem polymeren Werkstoff bis 1,5 Anteile amorpher Thermoplast zu 0,5 Anteilen teilkristallinem polymeren Werkstoff vorliegt. Beispielsweise liegen die beiden Komponenten im Verhältnis 1:1 oder 0,8 zu 1,2 oder 0,9 zu 1,1 im Blend vor.

Nach einer weiteren vorteilhaften Ausführungsform ist vorgesehen, dass das Pulver ein Blend umfasst, in dem die Glasübergangstemperatur des amorphen Thermoplasten und der Kristallitschmelzpunkt des teilkristallinen polymeren Werkstoffes nicht mehr als 25 °C, insbesondere im Bereich von 5°C bis 20°C auseinanderliegen.

Ebenso ist Gegenstand der vorliegenden Erfindung ein Bauteil gemäß Anspruch 3 für die Anwendung im Elektro-/Elektronik-Sektor mit ausreichendem Flammschutz, das im SLS-Verfahren unter Verwendung eines Pulvers mit einem Blend nach der Erfindung herstellbar ist. Amorphe PEI (Polyetherimid) sind in der Regel durch eine Glasübergangstemperatur charakterisiert.

Dagegen bieten die teilkristallinen Polyphenylensulfidsysteme, wie das für das bislang hauptsächlich im SLS Verfahren verwendete kommerzielle Material Polyphenylensulfid-Basis keinen ausreichend guten Flammschutz. Das SLS-Verfahren ist insbesondere durch die Temperaturdifferenz zwischen der Kristallitschmelztemperatur und der Kristallisationstemperatur der teilkristallinen Kunststoffe gekennzeichnet. Das Temperaturfenster zwischen den beiden genannten Temperaturen definiert den Aufschmelz- und Erstarrungsvorgang und damit die Aufheiz- und Abkühlphasen.

Über die Herstellung von Kunststoffblends aus amorphen PEI mit Polyphenylensulfid werden die Eigenschaften beider Kunststoffkomponenten nutzbar gemacht. Über das Engineering von Glasübergangstemperatur und Kristallit- und/oder Kristallisationstemperatur wird eine Verarbeitung mittels SLS-Verfahren möglich.

Durch die Blendherstellung kann zusätzlich zum lokal begrenzten Sintern der Kunststoffpartikel der teilkristallinen Komponente durch Auswahl der amorphen Komponente und deren Glasübergangstemperatur ein zusätzlicher Verfahrensparameter für den Heiz- und Abkühlvorgang des SLS-Verfahrens zur Verbesserung der Eigenschaften, insbesondere der Erhöhung der Flammwidrigkeit, genutzt werden.

Im Folgenden wird die Erfindung anhand ausgewählter Ausführungsbeispiele näher erläutert:

### 1. Beispiel, das nicht beansprucht wird:

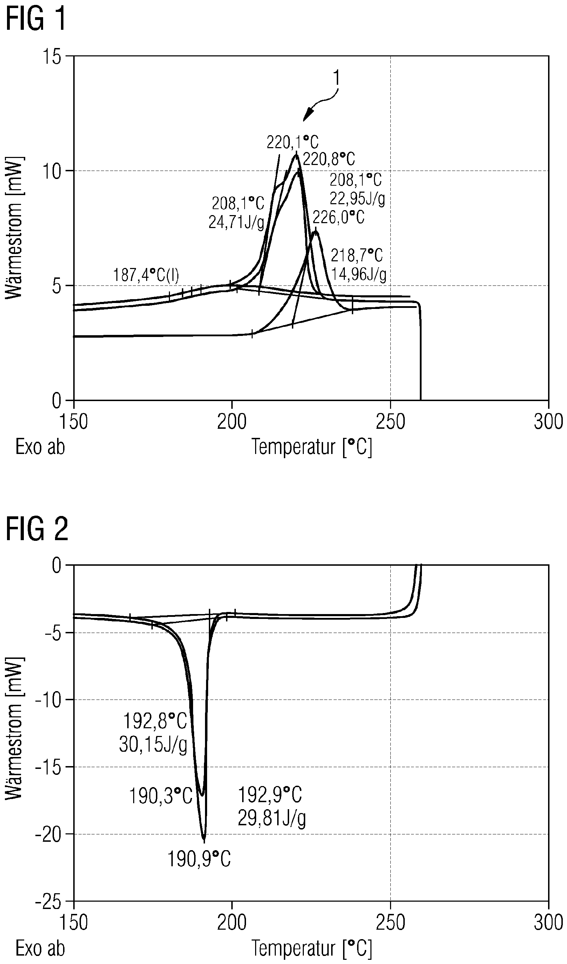

Es wurde ein Kunststoffblend aus PEI mit PA in ungefähr gleichem Verhältnis hergestellt. Der Blend ergab die in Figur 1 gezeigte Charakteristik:
Figur 1 zeigt die Reaktionskinetik eines Blends gemäß Beispiel 1 mit einem Verhältnis von PEI zu PA wie 1:1. In der Graphik zeigt die y-Achse den Wärmestrom in mW an und die x-Achse die Temperatur in °C.

Der Schmelzpeak von teilkristallinem PA bei 220°C überlappt mit dem Glasübergang von PEI bei ca. 217°C. Bei der ausgeprägten Schulter 1 in diesem Temperaturbereich findet sich der Glasübergang des PEI wieder. Der Laser heizt während des SLS-Verfahrens das Pulver des Kunststoffblends über den Schmelzpunkt der teilkristallinen Komponente auf.

Bei der Verarbeitung des Blend aus Beispiel 1 im SLS-Verfahren überlappt die Glasübergangstemperatur des PEI mit der Kristallitschmelztemperatur des PA im Bereich zwischen ca. 217°C bis 220°C. Die Kunststoffblend-Partikel werden im Temperaturbereich von ca. 230°C bis 270°C, beispielsweise bei ca. 260°C miteinander und mit der vorhergehenden Schicht verschmolzen.

Dabei stützt das nicht-aufgeschmolzene Pulver bereits ab einer Temperatur von unter 217°C die erzeugte Schmelze ab. Bei der Wahl des PA wird bevorzugt eine Komponente verwendet, deren Rekristallisation ab 190°C erfolgt.

Bei der Rekristallisationstemperatur des PA von 190°C liegt das PEI in festem Zustand vor. Das Blend gemäß Beispiel 1 aus PEI und PA im Verhältnis 1:1 ergibt die in Figur 2 gezeigte Reaktionskinetik während der Rekristallisation. Ein Vorteil des Blend gemäß Beispiel 1 ist, dass - wie in Figur 2 gezeigt - ein breiter Übergang von der Schmelze zum festen Zustand stattfindet, der bei geeigneter Temperaturführung bei SLS-Verfahren im Bauraum zum Abbau von Spannungen nutzbar gemacht werden kann.

Bei einem gemäß Beispiel 1 hergestellten Blend kann die Kristallisationskinetik im Vergleich zu reinen teilkristallinen Kunststoffen beeinflusst werden.

### 2. Beispiel:

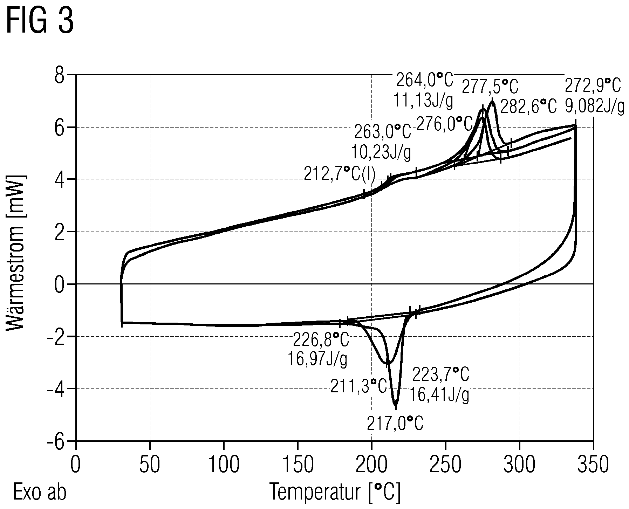

Es wurde ein Kunststoffblend aus PEI mit PPS in ungefähr gleichem Verhältnis hergestellt. Der Blend ergab die in Figur 3 gezeigte Charakteristik:
Figur 3 zeigt die Reaktionskinetik eines Blends gemäß Beispiel 2 mit einem Verhältnis von PEI zu PPS wie 1:1. In der Graphik zeigt die y-Achse den Wärmestrom in mW an und die x-Achse die Temperatur in °C.

Der Schmelzpeak von PPS bei 277,5°C überlappt nicht mit dem Glasübergang von PEI bei ca. 217°C.

Bei der Verarbeitung der beiden hochtemperaturstabilen Kunststoffsysteme bei Temperaturen oberhalb 300°C vorzugsweise noch darüber, beispielsweise bei 320°C, verschmelzen die beiden Pulver miteinander. Durch eine geeignete Kühlung bleibt die Umgebung unter der Kristallisationstemperatur und/oder unter der Glasübergangstemperatur.

Die gemäß der Erfindung vorgeschlagene Verbindung von amorphen und teilkristallinen Kunststoffen (von amorphem PEI und PPS) führt zudem zu einer Ergänzung oder Kombination des Eigenschaftsspektrums. Neben einem guten dynamischen Verhalten sollte die Dämpfung wegen des amorphen Zustands verbessert werden. Der Abrieb sollte durch die teilkristalline Komponente verringert werden und die Spannungsbildung im Vergleich zu einem reinen amorphen Kunststoff verbessert werden. Die teilkristalline Komponente garantiert eine gute Fließfähigkeit und die amorphe Komponente eine geringere Schwindung.

Durch Veränderung der Mischverhältnisse der Einzelkomponenten, also der Compound-Zusammensetzung kann das Eigenschaftsprofil und/oder die Prozessparameter je nach Bedarf angepasst werden.

Die Erfindung offenbart erstmals ein Pulver zur Verarbeitung im SLS-Verfahren, bei dem die Eigenschaften eines teilkristallinen Polymercompounds mit denen eines amorphen Polymercompounds vereint sind. So sind erstmals Bauteile über das SLS-Verfahren zugänglich, die eine ausreichende Flammwidrigkeit haben, um im E&E Sektor eingesetzt zu werden.

## Patentansprüche

1. Pulver zur Verarbeitung in einem Selektiven Laser Sinter-Verfahren, SLS-Verfahren, einen Blend aus zumindest amorphem Polyetherimid, PEI, und teilkristallinem Polyphenylensulfid, PPS, umfassend, wobei der Blend neben der Glasübergangstemperatur zumindest einen KristallisationsSchmelzpunkt aufweist, so dass eine additive Fertigung mittels SLS mit dem Blend realisierbar ist, wobei im Blend das amorphe PEI mit dem PPS im Verhältnis von 0,5 Anteile amorphes PEI zu 1,5 Anteilen PPS bis 1,5 Anteile amorphes PEI zu 0,5 Anteilen PPS vorliegt.

2. Pulver nach einem der vorstehenden Ansprüche, ein Blend aus amorphem PEI und PPS im Verhältnis 0,8 zu 1,2 umfassend.

3. Bauteil für die Anwendung im Elektro-/Elektronik-Sektor mit ausreichendem Flammschutz, das im SLS-Verfahren unter Verwendung eines Pulvers nach einem der Ansprüche 1 oder 2 herstellbar ist.

## Claims

1. Powder for processing in a selective laser sintering method, SLS method, comprising a blend of at least amorphous polyether imide, PEI, and semicrystalline polyphenylene sulfide, PPS, wherein the blend exhibits not only the
glass transition temperature but also at least one crystallization melting point, so that additive manufacturing by SLS is achievable with the blend, wherein the blend comprises the amorphous PEI and the PPS in a ratio of 0.5 parts amorphous PEI : 1.5 parts PPS to 1.5 parts amorphous PEI : 0.5 parts PPS.

2. Powder according to any of the preceding claims comprising a blend of amorphous PEI and PPS in a ratio of 0.8 : 1.2.

3. Component for use in the electricals/electronics sector having sufficient flame retardancy which is producible in the SLS method using a powder according to either of Claims 1 and 2.

## Revendications

1. Poudre pour le traitement dans un procédé de frittage sélectif au laser, procédé SLS, comprenant un mélange de polyétherimide au moins amorphe, PEI, et de sulfure de polyphénylène partiellement cristallin, PPS, le mélange présentant, outre la température de transition vitreuse, au moins un point de fusion de cristallisation, de sorte qu'une fabrication additive par SLS est réalisable avec le mélange, le PEI amorphe étant présent dans le mélange avec le PPS sous un rapport de 0,5 part de PEI amorphe pour 1,5 part de PPS à 1,5 part de PEI amorphe pour 0,5 part de PPS.

2. Poudre selon l'une quelconque des revendications précédentes, comprenant un mélange de PEI amorphe et de PPS sous un rapport de 0,8 à 1,2.

3. Composant destiné à être utilisé dans le secteur de l'électricité/de l'électronique présentant une résistance suffisante à la flamme, qui peut être fabriqué par le procédé SLS en utilisant une poudre selon l'une des revendications 1 ou 2.
